Europäisches Patentamt

European Patent Office

Office européen des brevets

(19)

(11) Veröffentlichungsnummer : **0 486 530 B1**

(12) **EUROPÄISCHE PATENTSCHRIFT**

(45) Veröffentlichungstag der Patentschrift :
19.10.94 Patentblatt 94/42

(51) Int. Cl.$^5$ : **G11B 23/087**

(21) Anmeldenummer : **90911578.4**

(22) Anmeldetag : **10.08.90**

(86) Internationale Anmeldenummer :
**PCT/EP90/01316**

(87) Internationale Veröffentlichungsnummer :
**WO 91/03051 07.03.91 Gazette 91/06**

(54) **BANDKASSETTE, INSBESONDERE MAGNETBANDKASSETTE, UND FOLLIEN DAFÜR.**

(30) Priorität : **12.08.89 DE 8909704 U**

(43) Veröffentlichungstag der Anmeldung :
**27.05.92 Patentblatt 92/22**

(45) Bekanntmachung des Hinweises auf die
Patenterteilung :
**19.10.94 Patentblatt 94/42**

(84) Benannte Vertragsstaaten :
**AT BE CH DE DK ES FR GB IT LI LU NL SE**

(56) Entgegenhaltungen :
EP-A- 0 203 302
DE-A- 2 825 457
DE-U- 8 606 119
DE-U- 8 909 704
GB-A- 2 000 104
GB-A- 2 047 200
GB-A- 2 211 818
US-A- 3 942 744
US-A- 3 977 626

(73) Patentinhaber : **BASF Aktiengesellschaft
Carl-Bosch-Strasse 38
D-67063 Ludwigshafen (DE)**

(72) Erfinder : **MANZKE, Klaus
Schulstrasse
D-6721 Westheim (DE)**
Erfinder : **GLINIORZ, Lothar
Carl-Bosch-Ring 24
D-6710 Frankenthal (DE)**
Erfinder : **SCHOETTLE, Klaus
Bergstrasse 115
D-6900 Heidelberg (DE)**
Erfinder : **HUCK, Arno
Hornisgrindestrasse 24a
D-7597 Rheinau (DE)**
Erfinder : **SCHAEFFER, Norbert
Vogelsang 19
D-6705 Deidesheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Bandkassette, insbesondere Magnetbandkassette, mit einem Gehäuse, umfassend Boden- und Deckelwände und Gehäuse-Rück- und Vorderseiten, mit mindestens einem Bandwickel auf einem im wesentlichen flanschlosen Wickelkern, auf den und/oder von dem ein Band auf- bzw. abwickelbar ist, wobei zwischen dem Bandwindungen aufweisenden Bandwickel und den Boden- und Deckelwänden der Kassette Folien mit abgebogenen oder abgeknickten, einander zugeordneten und in bezug auf die Kassettemittelebene einander gegenüberliegenden Folienbereichen vorgesehen sind, die federnd auf den oder die Bandwickel drücken, wobei die Folien im Mittelbereich Längsknicke aufweisen, die sich einerseits teilweise an den Boden-bzw. Deckelflächen abstützen und die zum Bandwickel hin gerichtete Knickteile aufweisen, die zumindest auf den Wickelkern und/oder Bandwickel Federdruckkräfte ausüben, sowie geeignet ausgebildete Folien für derartige Bandkassetten.

Es sind, z.B. aus der DE-PS 28 25 457, plane Folien mit starr eingeschränkten Längsicken bekannt, mit Sickenhöhen von 0,28 bis 0,53 mm für Kompakt-Kassetten mit einem axialen Freiraum von etwa einem (1 mm) bis etwa eins Komma zwei Millimeter (1,2 mm). Dabei sollen die Längssicken der Folien den Bandwickeln und Wickelkernen zugewandt sein. Liegen die Sickenhöhen an der unteren Grenze des oben angegebenen Höhenbereichs (z.B. bei 0,2 - 0,3 mm) wirken die Folien wie starre Beilagescheiben zwischen Bandwickel und Gehäusewandungen, da keine Abfederung existiert. Der Bandwickel hat daher das Bestreben, sich in seiner Höhe so auszubilden, daß er den vollen, zur Verfügung stehenden, axialen Freiraum zwischen den an den Gehäusewänden zur Anlage kommenden Folien einzunehmen. Wenn die Sickenhöhen an der oberen Grenze des oben angegebenen Bereichs liegen (z.B. bei 0,4 - 0,5 mm) kommt es zur Drehmomenterhöhung der Kassette und dadurch leicht zur Schwergängigkeit der Kassette bis zum Verklemmen des oder der Bandwickel im Gehäuse.

Mit dem DE-GM 86 06 119 sind außerdem Zwei-Knick-Folien für Kompakt-Kassetten bekannt, deren Längsknickkanten den Bandwickeln zugewandt sind und deren gegenüber der Folienmittelebene nach oben bzw. unten abgeknickte Folienlängsränder sich innen an der Deckelwand bzw. der Bodenwand der Kassette abstützen. Dadurch werden die Folien über Federkräfte zwischen dem Gehäuse und den Bandwickeln gehalten. Die Federkennlinie ist relativ flach und linear, was eine kleine Federkonstante ergibt. Wenn das Gewicht des vollen Bandwickels auf eine der Folien drückt, so kommt es zur großflächigen Anlage zwischen dem Bandwickel und der Folie, wobei die Federung der Folie fast nicht ausreicht, den Bandwickel im Abstand zur Folie bzw. zur Gehäusewandung zu halten. Der großflächige Kontakt erzeugt bei Spielvorgängen der Kassette im Gerät elektrostatische Aufladungen zwischen Folie, Kassettengehäuse und Magnetband, insbesondere, wenn letzteres einen hohen Oberflächenwiderstand aufweist, mit der Folge, daß das Drehmoment der Kassette erheblich wächst und diese schließlich sogar blockiert.

Aus der EP-A- 0 203 302 ist eine Kassette und eine Beilagefolien-Kombination gemäß dem Oberbegriff des Anspruchs 1 bzw. des Anspruchs 16 bekannt. Dieses Dokument betrifft eine Bandkassette mit einer Folienkombination, wobei die Längsknicke ausschließlich an der Innenseite der zugeordneten Gehäuse fläche anliegen und bei der durch die Durchmesserveränderung der Bandwickel die auf dem Bandwickel- bzw. Wickelkernumfang aufliegenden, abgeknickten Seitenfolienbereiche eine variable Durchbiegung der Folie im Mittelbereich d.i. im Bereich zwischen den Längsknicken, erreicht wird und damit auf den Wickelkern bzw. den Bandwickel definitive Druckkräfte ausgeübt werden.

Es ist Aufgabe der Erfindung, eine Kassette mit Beilagefolien auszustatten, die eine zuverlässige Bandwickel- und Bandführung, insbesondere im Band-Ein-, und Auslaufbereich am Bandwickel, bei zulässigem Drehmoment gewährleistet, sowie geeignete Beilagefolien selbst bereitzustellen.

Die Aufgabe wird mit einem Bandkassette, insbesondere Magnetbandkassette, mit einem Gehäuse, umfassend Boden- und Deckelwände und Gehäuse-Rück- und Vorderseiten, mit mindestens einem Bandwickel auf einem im wesentlichen flanschlosen Wickelkern, auf den und/oder von dem ein Band auf- bzw. abwickelbar ist, wobei zwischen dem Bandwindungen aufweisenden Bandwickel und den Boden- und Deckelwänden der Kassette Folien mit abgebogenen oder abgeknickten, einander zugeordneten und in bezug auf die Kassettenmittelebene einander gegenüberliegenden Folienbereichen vorgesehen sind, die federnd auf den oder die Bandwickel drücken, wobei die Folien im Mittelbereich als federnde Folienbereiche beidseitig der Mittellängeachse der Kassette angeordnete Längsknicke aufweisen, die sich einerseits teilweise an den Boden- bzw. Deckelflächen abstützen und die andererseits zum Bandwickel hin gerichtete Knickteile aufweisen, die zumindest auf den Wickelkern und/oder Bandwickel Federdruckkräfte ausüben, dadurch gelöst, daß die Längsknicke mit unterschiedlichen Querschnittsformen ausgebildet sind zur Ausübung verschieden großer Federdruckkräfte auf den zumindest einen Wickelkern und/oder Bandwickel, wobei jede der unterschiedlichen Querschnittsformen (DK, EK) entweder jeweils über die ganze Länge der Längsknicke (K 1,2; K 3,4) vorgesehen ist zur Erzeugung der jeweiligen unterschiedlichen Federandruckkraft über die ganze Länge jedes der

EP 0 486 530 B1

Längsknicke (K 1,2; K 3,4) oder die unterschiedlichen Querschnittsformen im Zuge von wenigstens einem der Längsknicke (C 3/2) über jeweils einen Teil seiner Länge vorgesehen sind zur Erzeugung unterschiedlicher Federdruckkräfte jeweils in Teilen der Länge des wenigstens einen Längsknicks (C 3/2).

Die Aufgabe wird weiterhin durch eine Beilagefolien-Kombination für Banbkassetten, insbesondere Magnetbandkassetten, mit mindestens einem Bandwickel auf einem im wesentlichen flanschlosen Wickelkern, gelöst, wenn deren zwei Folien mit abgebogenen oder abgeknickten, einander zugeordneten und in bezug auf eine Mittelebene einander gegenüberliegenden Folienbereichen versehen sind, wobei die Folien in ihrem Mittelbereich als federnde Folienbereiche beidseitig zur Mittellängeachse jeder Folie Längsknicke aufweisen, die einerseits an der der Mittelebene abgewandten Seite der Folie ausgebildet sind und die andererseits zur Mittelebene hin gerichtete Knickteile mit einer Federkonstanten aufweisen, wobei die Längsknicke mit unterschiedlichen Querschnittsformen ausgebildet sind zur Ausübung verschieden großer Federdruckkräfte in Richtung zur Mittelebene, und wobei jede der unterschiedlichen Querschnittsformen (DK, EK) entweder jeweils über die ganze Länge der Längsknicke (K 1,2; K 3,4) vorgesehen ist zur Erzeugung der jeweiligen unterschiedlichen Federandruckkraft über die ganze Länge jedes der Längsknicke (K 1,2; K 3,4) oder die unterschiedlichen Querschnittsformen im Zuge von wenigstens einem der Längsknicke (C 3/2) über jeweils einen Teil seiner Länge vorgesehen sind zur Erzeugung unterschiedlicher Federdruckkräfte jeweils in Teilen der Länge des wenigstens einen Längsknicks (C 3/2).

Damit wird es erstmals möglich, eine gute Band- und Bandwickelführung zu realisieren, ohne daß die Wirkung der Führungsmittel in der Praxis von im allgemeinen vorhandenen Elektrostatikkräften verringert oder zunichte gemacht würde.

Unter "Längsknicken" wird dabei allgemein ein in Folienlängsrichtung (z.B. einer Folie in einer Kompakt-Kassette) sich erstreckender, gebogener oder geknickter Folienbereich verstanden.

In praktischer Ausführung können die Längsknicke im Verlauf ihrer Längsausdehnung unterschiedliche Querschnittsformen aufweisen. Beispielsweise kann es vorteilhaft sein, die Längsknicke in ihrem Mittelbereich und in ihren Endbereichen mit unterschiedliche Querschnittsformen für große bzw. kleinere Federdruckkräfte zu versehen.

Damit ist es möglich, Band-, Bandwickel- und Wickelkernbereiche in der Kassette gezielt mit vorgegebenen Federandruckkräften zu beaufschlagen.

Zweckmäßig können die Längsknicke innerhalb oder gerade außerhalb des Wickelkerndurchmessers angeordnet sein.

Dadurch wird eine gute Führung und Ausrichtung auch des leeren Wickelkerns erreicht und mit gerade außerhalb des Wickelkerndurchmessers liegenden Längsknicken wird zusätzlich eine Führungs- und Ausrichtwirkung für die ersten auf den Wickelkern aufzuwickelnden Bandwindungen erreicht.

In einer Bandkassette mit zwei koplanaren Bandwickeln, in der eine Längsmittelachse die Mitten der Wickelkerne miteinander verbindet, kann an der Folie vorteilhaft zwischen der Längsmittelachse und der Gehäuse-Rückseite ein erster Längsknick mit relativ großer Federdruckkraft vorgesehen sein, der bis zu den Folienschmalseiten durchgehend ausgebildet ist.

Dadurch ergibt sich an der besonders bandumklappgefährdeten Rückseite der Kassette eine relativ hart gefederte Bandwickel-Führung und -Abstützung ohne daß großflächige Kontaktbereiche zwischen Bandwickel und Folien dazu notwendig wären.

In weiterer Ausgestaltung kann in der Kassette mit den koplanaren Bandwickeln zwischen der Kassettenlängsmittelachse und der Gehäuse-Vorderseite ein im Vergleich mit dem ersten Längsknick kürzerer Teil eines zweiten Längsknicks ausgebildet sein, der in der Länge mindestens von einem zum anderen Wickelkern, aber nicht bis zu den Folienschmalseiten reicht.

Damit wird vorteilhaft erreicht, daß eine relativ harte Federdruckkraft zumindest in der Nähe des Bereichs der Wickelkerne ausgeübt wird und daß dieselbe auf die Wickelkerne etwa symmetrisch zur Mittellängsachse der Kassette wirkt, so daß die Wickelkerne in einer vorgegebenen Ebene zwischen den Gehäusewandungen in relativ waagrechter Lage federnd gelagert sind.

In praktischer Ausbildung der erfindungsgemäßen Bandkassette sind der erste längere Längsknick und/oder der kürzere Teil des zweiten Längsknicks jeweils durch einen Doppelknick gebildet, wobei die eine Knickkante zur Abstützung an den Boden- bzw. Deckelwänden und die andere Knickkante zum Bandwickel hin gerichtet ist.

Alternativ dazu können der erste längere Längsknick und der kürzere Teil des zweiten Längsknicks jeweils durch eine relativ schmale Sicke oder Prägung mit relativ großer Federdruckkraft gebildet sein.

Mit dieser praktischen Ausführung können die wesentlichen Vorteile der Erfindung ebenfalls realsisiert werden, wenn eine Federcharakteristik der Folie mit Längssicken eingestellt und aufrechterhalten wird.

Es ist weiterhin zweckmäßig, wenn der kürzere Teil des zweiten Längsknicks an den Enden mit je einem Ein-/Auslaufknickteil für das auf- bzw. abzuwickelnde Band versehen ist, der den zweiten Längsknick bis zur Umrißkante der Folie hin fortgesetzt und der eine gegenüber dem kürzeren zweiten Längsknick kleinere Federdurckkraft aufweist. Damit wird erreicht, daß mittels eines "weicheren Federdrucks des Knickteils der ein- bzw. auslaufende Bandabschnitt nicht in seiner Vertikallage und -ausbildung verändert, z.B. durch Schrägstellung oder Umknicken, sondern in seiner Vertikallage und -ausbildung noch unterstützt und orientiert werden. Außerdem werden Einlaufriefen in der Folie beim Einspulen des Bandes bei der Kassettenherstellung vermieden.

In weiterer Ausführung kann sowohl zwischen der Längsmittelachse der Kassette und der Gehäuse-Rückseite als auch zwischen der Längsmittelachse und der Gehäuse-Vorderseite je ein von einem zum anderen Wickelkern reichender Längsknick mit relativ großer Federdruckkarft vorgesehen sein, der an jedem Ende mit einem Ein-/Auslaufknickteil für das auf- bzw. abzuwickelnde Band versehen ist und der bis zur Umrißkante der Folie reicht.

Damit wird eine zur Mittellängsachse völlig symmetrische Folienausbildung bereitgestellt, die, wenn sie wie in der Zeichnung dargestellt rechteckig oder zu ihrer Lösungsmittelachse symmetrisch ausgebildet ist, eine Vereinfachung der Folienherstellung und des Konfektionierens der Folien in die Kassette ermöglicht.

In praktische Ausbildung können die Ein-/Auslauf-Knickteile den Längsknick im wesentlichen geradlinig bis zu den Folienenden fortsetzen.

Mit im wesentlichen gleichen Vorteilen können die Ein-/Auslaufknickteile auch im Winkel zum kürzeren Teil des Längsknicks, insbesondere in Richtung zu einer Ecke der Folie, verlaufen.

Praktisch können die Ein-/Auslaufknickteile durch je einen Einfach-Knick mit relativ kleiner Federdruckkarft gebildet sein, wobei die einzige Knickkante dem ein- bzw. auslaufenden Bandabschnitt zugewandt ist.

Dadurch wird die Unterstützung der Vertikallage und -ausbildung in der Praxis vorteilhaft erreicht, obwohl die Herstellung des Einfachknicks sehr einfach ist.

In weiterer praktischer Ausgestaltung können die Ein-/Auslaufknickteile auch durch je eine relativ breite Sicke oder Prägung mit relativ kleiner Federdruckkraft gebildet sein, von der die jeweils höchste Erhebung dem ein- bzw. auslaufenden Bandabschnitt zugewandt ist.

In weiterer praktischer Ausbildung kann die Federdruckkraft des dem Wickelkern und/oder Bandwickel zugeordneten Längsknicks zur Federdruckkraft des dem Ein-/Auslaufbereich des Bandes zugeordneten Längsknicks im Bereich von 3 : 2 bis 4 : 1, insbesondere im Bereich von 4 : 1 bis 5 : 2, vorzugsweise etwa bei 3 : 1 liegen.

Damit ist die Möglichkeit gegeben, je nach Dicke und Quersteifigkeit des jeweiligen Kassettenbandes geeignete Beilagefolien mit voreinstellbaren Federdruckkräften auszuwählen.

Eine aus Polyester, insbesondere Polyterephthalat, bestehende Folie mit einer Dicke von 50 μm kann dabei praktisch einen Doppelknick aufweisen, dessen Abstand der Knicklinien im Bereich von ca. 1,5 bis 4 mm, insbesondere von ca. 2 bis 3 mm und vorzugsweise bei ca. 2,4 mm beträgt. Damit werden günstige Federdruckkräfte im Sinne der Erfindung realisierbar.

Vorstehende Diskussionen und Ausgestaltungen sind auf die Folien selbst, insbesondere ein Folienpaar, im wesentlichen übertragbar. Einzelheiten sind aus den auf die Beilagefolien gerichteten Patentansprüchen zu entnehmen.

Einzelheiten der vorliegenden Erfindung sind anhand von in den Zeichnungen dargestellten Ausführungsbeispielen beschrieben.

Es zeigen

| | |
|---|---|
| Figur 1 | eine erfindungsgemäße Kassette in Explosionsdarstellung |
| Figur 2 | die Folienausführung aus Figur 1 mit dreieinhalb Knicken |
| Figur 3 | eine Folienausführung mit 2 unterschiedlichen Längsknicken (3-Knick-Folien) |
| Figur 4 | eine symmetrische Folienausführung mit zweimal eineinhalb Knicken |
| Figur 5 | eine Folienausführungs-Variante mit dreieinhalb Knicken |
| Figur 6 und 7 | je eine weitere Folienausführungs-Variante mit dreieinhalb Knicken |
| Figur 7A | die Folienausführung aus Figur 7 in Paardarstellung im Mittel-Querschnitt A-A' |
| Figur 8 | schmematische Querschnittspaare |
| Figur 9 | ein Meßdiagramm, die die Federkonstante der Folie in Abhängigkeit vom Ort in der Kassette zeigt, Beispiel Doppelknickfolie |
| Figur 10 | ein Meßdiagramm gemäß Figur 9 jedoch mit der 3-Knick-Folie aus Figur 3 |
| Figur 11 | ein Meßdiagramm gemäß Figur 9, jedoch mit der Dreieinhalb-Knick-Folie aus Figuren 2 oder 5 |
| Figur 12 | Drehmoment- und Wow- und Flutter-Vergleichsmeßkurven mit einer Kassette nach dem Stand der Technik |

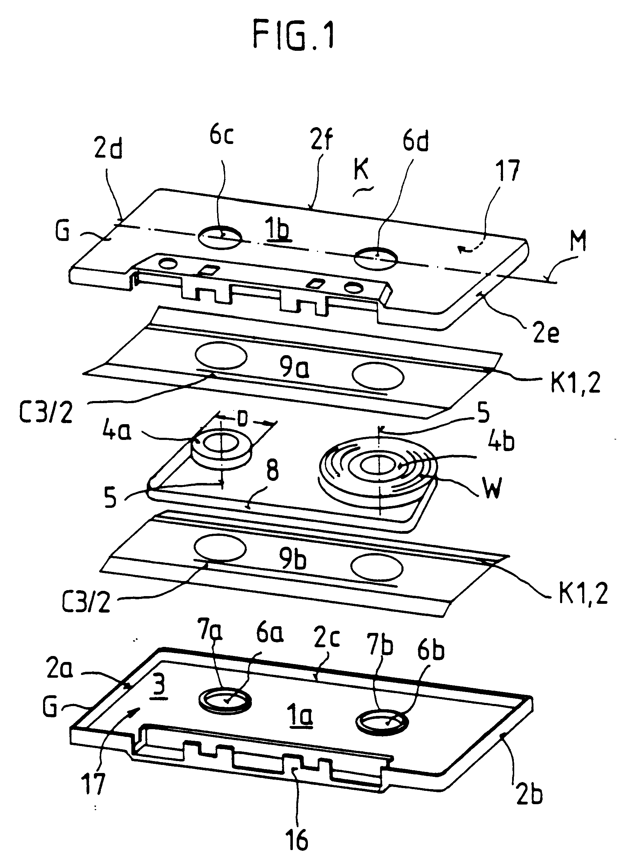

Figur 1 zeigt eine Kompaktkassette K mit einem Gehäuse G, bestehend aus zwei rechteckigen Boden- und Deckelwänden la und 1b und Seitenwänden 2a, 2b und 2c bzw. 2d, 2e und 2f, die zusammengebaut einen im wesentlichen quaderförmigen Hohlraum 3 zur Aufnahme der zwei Wickelkerne 4a und 4b bilden, die um senkrecht zu den Hauptwänden 1a, 1b liegende Achsen 5 und koaxial dazu liegende Öffnungen 6a bzw. 6c und 6b bzw. 6d diese umgebende nach innen gerichtete Lagerränder 7a bzw. 7b (die dazugehörigen oberen Lagerränder sind nicht dargestellt) drehbar gelagert sind. Zwischen den Wickelkernen 4a und 4b ist ein Magnetband 8 wickelbar, wobei es an beiden Wickelkernen 4a und 4b mit seinen Enden befestigt ist und der in der Zeichnung auf dem Wickelkern 4b befindliche Bandwickel W ganz oder teilweise auf den Wickelkern 4a aufwickelbar ist und dann der Wickelvorgang umgekehrt ablaufen kann.

An der Innenseite jeder der Boden- und Deckelwände 1a und 1b liegt eine Gleitfolie 9a bzw. 9b derartig an, daß durch längsverlaufende, schmale, parallele, gebogene oder geknickte Folienbereiche, oben als "Längsknicke" bezeichnet, federnd gegen die Stirnseiten der Wickelkerne 4a und 4b, gegen den Bandwickel W sowie gegen das Magnetband 8 selbst drücken.

Mit MF ist in allen Folieneinzeldarstellungen die Längsmittelachse bezeichnet.

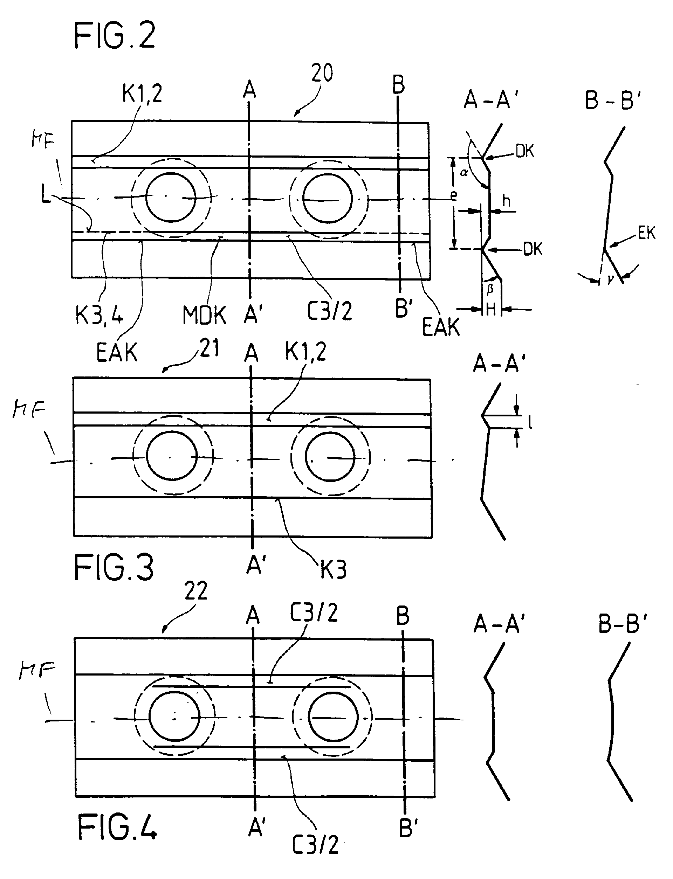

Der bezüglich der Vorderseite 1b der Kassette hintere (erste) Längsknick K 1,2 ist bis zu den Folienenden hin durchgehend und als Doppelknick, s. z.B. Querschnittsdarstellung (A-A', B-B') in Figur 2, ausgebildet. Der vordere (zweite) Längsknick ist mit C 3/2 bezeichnet, da es sich um einen eineinhalbfachen Knick handelt.

Die Längsknicke K 1,2 und C 3/2 sind hier als Parallelknicke ausgebildet deren Abstand zur Kassettenmittenachse M (die der Längsmittelachse entspricht) gleichbleibend so gewählt ist, daß die mit dem Band 8, und/oder den Wickelkernen 4a, 4b und/oder den Bandwickeln W in Führungskontakt stehenden Längsknicke K 1,2 und C 3/2 gerade außerhalb des Außendurchmessers D des Wickelkerns 4 liegt, so daß nach innen gerichtete Anlaufschrägen mit den äußeren oberen oder unteren Ringkanten des leeren Wickelkerns 4 in Linienkontakt steht, während eine nach außen gerichtete Anlaufschräge den ankommenden, aufzuwickelnden Bandwindungen zugewandt ist und für deren Ausrichtung und Führung zum Wickelkern sorgt.

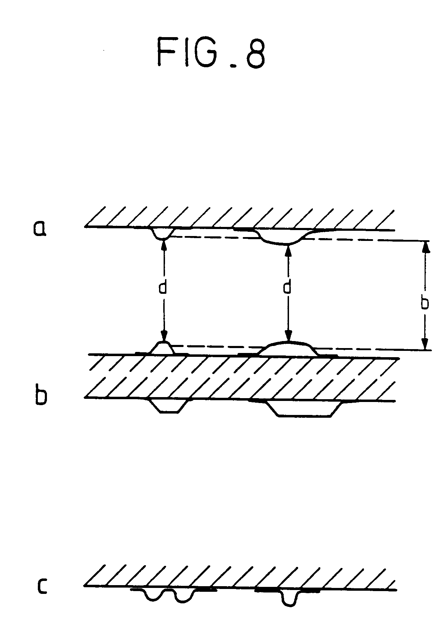

Der kleinste Abstand d der Längsknicke K 1,2 und C 2/3 in unmittelbarer Nähe des zugehörigen Wickelkerns 4 entspricht im wesentlichen der Breite b des Bandes 8 oder ist geringfügig kleiner (d≦b), wie in Figur 8 angedeutet ist.

In Figur 2, den Querschnittsdarstellungen A-A', B-B', ist die Form der Doppelknicke DK der Folie 20 und des Einfach-Knicks EK der Einlauf-/Auslaufknickteile EAK erkennbar. Die Knick-Winkel α [ beim Doppelknick DK] und γ [beim Einfach-Knick EK], die die Knickhöhen und in Verbindung mit dem Material und der Dicke der Folie die Feder-Charakteristik der Folie bestimmen, werden jeweils nach Kassettentyp und mechanischen Magnetband-Kennwerten ausgelegt. In einem praktischen Beispiel einer BASF (Chrom Maxima II Compact Cassette wurden bei Folien aus Polyester der Stärke 0,050 mm Knickhöhen von h = 0,2 bis 0,5 mm und H = 1 bis 2 mm verwendet, bei einem Knickabstand 1 von vorzugsweise 2,4 mm, der generell in den Bereichen von ca. 1,5 bis 4 mm, insbesondere von ca. 2 bis 3 mm, gewählt werden kann.

Der Längsknick C 3/2 aus Figur 2 besitzt einen "kürzeren Teil" oder Mittelteil MDK, der kürzer als der durchgehende Längsknick K 1,2 ist, aber sonst im wesentlichen mit gleichen Abmessungen, jedoch mit kürzerer Länge, etwa tangential von Wickelkern 4a bis 4b reichend, ausgebildet ist.

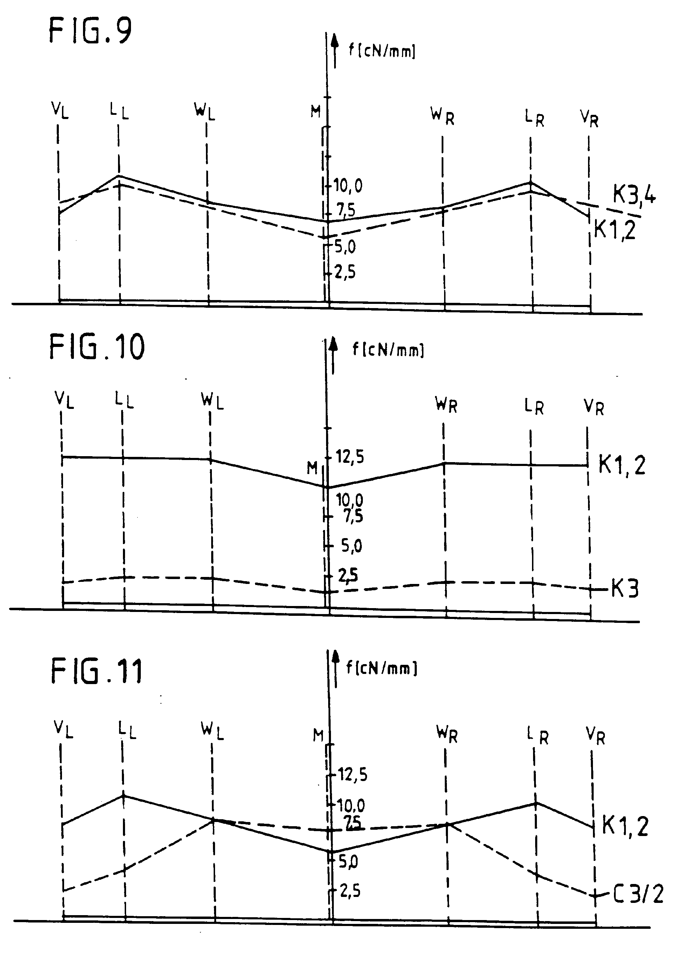

Verlängerungslinien L deuten an, wie zwei durchgehende, als Doppelknicke ausgebildete Längsknicke K 1, 2 verlaufen, mit welcher Ausführung im Meßdiagramm in Figur 10 noch später verglichen werden soll. Der Querschnitt B-B' entspricht natürlich nicht der DK-Version, darauf trifft der Querschnitt A-A' zu.

In Figur 3 ist eine Ausführung einer Folie 21 mit zwei Längsknicken K 1,2 und K 3 dargestellt, wobei K 1, 2 wie in Figur 2 ein Doppelknick (DK) und K 3 ein durchgehender Einfachknick EK ist wie im Querschnitt A-A' deutlich erkennbar ist. Da die Federdruckkraft des EK deutlich geringer als die des DK ist, vgl. **Figur 10**, ist es auch einsehbar, daß die Wickelkerne 4 und Bandwickel W zu einer Unsymmetrie, praktisch einer Schrägstellung zu den Gehäusewänden 17, gedrängt werden und solche Kassetten eher zur Drehmomenterhöhung neigen, wobei die Einlauf/Auslauf-Charakteristik des Bandabschnitts jedoch schon deutlich, gegenüber handelsüblichen Kassetten verbessert ist.

Figur 4 zeigt doppelt symmetrisch angeordnete C 3/2 Längsknicke auf einer Folie 22, die Vorteile bezüglich der Herstellung und des beliebigen Einlegens (bzgl. Vorder- und Rückseite der Kassette!) bei der Konfektionierung haben.

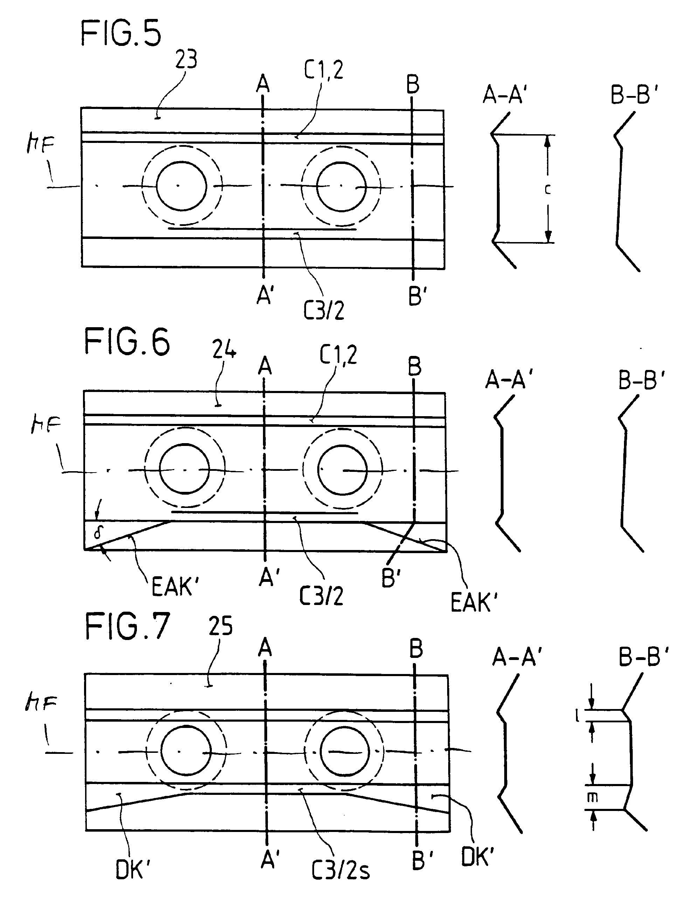

Es könnte möglich sein, daß im linken bzw. rechten oberen Viertel der Bandwickel nicht ganz so gut geführt wird, wie bei den Folienausführungen 20 und 23 der Figuren 2 und 5. Figur 5 zeigt die Folie 23, die lediglich einen leicht größeren Abstand c zwischen dem DK C 1, 2 und dem Kombinationsknick C 3/2 aufweist, als der Abstand e in Figur 2, e < c. Damit wird eine verringerte Führung, besonders des leeren Wickelkerns realisiert.

Folie 24 in Figur 6 unterscheidet sich lediglich durch zwei schräg zum Folienumrißrand verlaufende Ein-/Auslaufknicke EAK', was die Funktion der Folie 24 gegenüber der der Folie 20 jedoch nicht verändert.

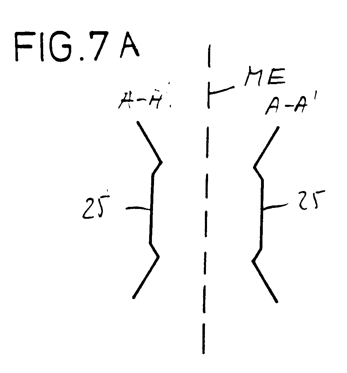

Die Folie 25 in Figur 7 zeichnet sich durch deltaförmig nach aupen zulaufende Ein-/Auslaufknicke (EAK), die einer jedoch als breiter zulaufende Doppelknicke oder entsprechende Sicken DK' ausgebildet sind. Der Mittelteil (MDK) des Längsknicks C 3/2 s kann in letzterem Fall auch als Sicke oder Prägung ausgebildet sein.

Figur 7A zeigt die Mittel-Querschnittsdarstellung A-A' eines Folienpaares 25 in Einbaulage und der Bezugs-Mittelebene ME, die in der Bandkassette die Mittelebene des Kassetteninnenraums bzw. der Mittellage der Bandwickel darstellt.

Verschiedene Prägungs- oder Sickenkombinationen mit links größerer und rechts kleinerer Federdruckkraft sind in Figur 8 gezeigt. Es zeigen

Figur 8a)     eine Kreisform-Sicke oder -Prägung
Figur 8b)     eine Trapez-Sicke oder -Prägung
Figur 8c)     eine Doppelsicke oder -prägung in Kombination mit einer Einfachsicke oder -prägung.

Es können auch andere Querschnittsformen, jedoch gleichwirkend benutzt werden.

Figur 9 zeigt für die Doppelknick-Folie aus Figur 1 durchgehende Längsknicke K 1,2 und K 3,4 mit den Verlängerungen L!) den Verlauf der jeweiligen Federkonstante an verschiedenen Orten der DK-Folie 20 in der Kassette K.

Die Meßorte sind:

V     Einlaufbereich des Bandes bei leerem Bandwickel
L     Einlaufbereich des Bandes bei vollem Bandwickel
W     Wickelkernmitte
M     Kassettenmitte

Es wird jeweils entlang der Längsknicke die Federdruckkraft bei gleichem, vertikalen Federweg von 0,4 mm gemessen.

Die Indizes L und R bedeuten dabei "Links" und "Rechts". Es ergibt sich aus Figur 9, daß hohe Federdruckkräfte von außen nach innen, über die Längsrichtung der CC gesehen verlaufend, gemessen wurden.

Figur 10 zeigt sehr unterschiedliche Federdruckkräfte, wobei der Längsknick (EK) K 3 nur etwa 1/10 der Federdruckkräfte des Längsknicks K 1,2 aufbringt und dadurch eine Schieflage der Wickel entstehen kann.

Figur 11 zeigt schließlich das Ergebnis der C 3/2 Längsknickfolie 20 (ohne die Verlängerungen L!) oder 25, wobei im Ein-/Auslaufbereich ($V_L$, $V_R$)etwa nur ein Drittel der Federdruckkräfte gegenüber denen beim Längsknick K 1,2 auftritt, so daß das Band störungslos aufgewickelt und abgewickelt wird, die Wickelkerne und Bandwickel in Sollage gehalten werden und elektrostatische Aufladungen, durch die geringen Kontaktflächen zwischen Folien und Band/Bandwickeln weitgehend vermieden werden.

Im folgenden wird die Dimensionierung der Einzelteile der Bandkassette und Folien nach der Erfindung am Beispiel einer Kompakt-Kassette (CC) nach DIN 45 516 (Juni 1976) angegeben:

```
BASF Chrom Maxima II Compact Cassette
Breite des Magnetbandes 8                    b  = 3,81 mm
Axiale Breite der Wickelkerne 4              Ba = 3,9 bis 4,1 mm
                                                 (ø 4,0 mm)
Axiale Höhe des Kassettenhohlraums 3         Wa = 5,0 bis 5,2 mm
                                                 (ø 5,1 mm)


Dicke der Gleitfolien 9, 20 bis 25                50 µm
Höhe der Knickränder der Folien              h  = 0,2 bis 0,5 mm
Höhe der Seitenteile der Folien              H  = 1 bis 2 mm
Knickabstand                                 l  = 2,4 mm
```

(Bereiche des Knickabstandes von ca. 1,5 bis 4 mm, insbesondere von ca. 2 bis 3 mm)

Zum Vergleich der Erfindung mit dem Stand der Technik wird eine Compact-Cassette (CC) der Fa. Sony, Japan, vom Typ UCX-S 90 (CC A) mit einer Compact-Cassette vom Typ Chrom Maxima® II der BASF AG (CC B) unter sonst gleichen Meßbedingungen verglichen. Die CC der Fa. Sony entspricht der in der DE-PS 28 25 457 beschriebenen Kassette, wobei die Längsprägungen der Folien praktisch eine Höhe h der Prägungen von h = 0,3 mm und eine Breite (Abstand der Knickkanten von etwa 2,6 mm) aufwiesen, so daß die flachen Folien relativ lose zwischen Gehäuseinnenflächen und Bandwickel angeordnet waren, wobei die Prägungen jedoch eine harte Federcharakteristik besaßen.

Der in der DE-PS 28 25 457 angegebene Höhenbereich der Prägungen h von 0,28 bis 0,53 mm wird durch

® ist eingetragenes Warenzeichen der BASF AG, Ludwigshafen

Unterlegen von Folienstreifen im Mittelbereich der Kassette (CC A) nachgestellt, ebenso wie in der BASF (CC B), in der die nach unten und nach oben weisenden, gebogenen oder geknickten Folienbereiche eine Gesamthöhe von 0,8 mm aufwiesen, also federnd abstützend auf Wickelkern und Bandwickel wirkten. Die Folienstärken waren in beiden CC's dieselben. Das Material war Polyterephthalat.

In beiden Fällen der Drehmomentmessung und der Wow- und Flutter-Messung wurde die Differenz des theoretischen Abstandes d (zwischen Prägungen bzw. Knickkanten, (vgl. Figur 8) und der Bandbreite b als Abszisse zugrundegelegt und variiert. Der Wert 0 (Null) besagt also, daß d = b ist, daß also kein Freiraum zwischen Bandwickel und Gehäuseinnenfläche mehr vorhanden war.

Beschreibung der Messungen.

Bei der Drehmomentmessung wird das Aufwickeldrehmoment beim Umspulen einer CC gemessen, ohne Kontakt des Magnetkopfes mit dem Band. Der Aufwickeldorn wird mit konstantem Moment von 8 cNcm gebremst. Die Aufwickelseite hat einen annhähernd vollen und die Abwickelseite einen annhähernd leeren Wickel. Die Meßwerterfassung erfolgt kurz vor dem Ende des Banddurchlaufs. Die Lage der CC ist waagerecht während der Messung. Die Drehzahl des Aufwickeldorns beträgt 500 Upm (Umdrehungen pro Minute). Die Meßvorrichtung ist ein Drehmoment-Meßgerät (Eigenbau der BASF AG, Ludwigshafen) und basiert auf der Messung der Stromerhöhung des Aufwickelmotors.

Die Wow- und Flutter-Messung ist eine Messung der Tonhöhenschwankung einer CC bei Wiedergabe eines aufgezeichneten Meßsignals der Frequenz 3150 Hz auf zwei verschiedenen handelsüblichen Single-Capstan-Recordern mit je 2 Magnetköpfen. Das Wow- und Flutter-Meter der Fa. Woelke, 8069 Schweitenkirchen mißt die auftretenden Frequenzschwankungen unbewertet mit einer Demodulatorbandbreite von 1000 Hz. Von einer Vielzahl von Messungen werden die zehn größten Differenzwerte verwendet und mittels Rechners HP 85 B (der Fa. Hewlett & Packard), der Mittelwert berechnet. Alle Meßwerte werden in einer Häufigkeitsverteilung dargestellt und über die gesamte Bandlänge aufgeschrieben.

Die Kurven A sind die Meßkurven der CC UCX-S 90 (Sony) und die Kurven B die der BASF CC gemäß der Erfindung.

Die durchgezogenen Kurven zeigen die Meßwerte der bezüglich Bandklammer unveränderten CC, die gestrichelten dagegen einen vorgenommenen Bandklammerversatz gegenüber der Ebene des Wickelkerns von 0,1 mm.

Meßergebnisse der CC A (Sony)

| $\Delta$ (d-b) [mm] | 0,1 | 0,15 | 0,20 | |
|---|---|---|---|---|
| Md [Mcm] | 0,20 (44 %) | 0,29 (64 %) | 0,45 (100%) | oKV |
| | 0,20 (40 %) | 0,28 (56 %) | 0,4 (80 %) | mKV |
| W+F [%] | 0,085 (11,4 %) | 0,175 (30,4 %) | 0,425 (73,9 % | oKV |
| | 0,33 (51,5 %) | 0,40 (62,5 %) | 0,44 (68,8 %) | mKV |

oKV = ohne Klammerversatz
mKV = mit Klammerversatz

(Die Prozentangaben beziehen sich auch in der folgenden Tabelle jeweils auf den Anfangswert:
bei A auf den jeweiligen Wert bei d-B = 0,15
bei B auf den jeweiligen Wert bei d-b = 0.)

Als Ergebnis ist festzuhalten, daß die Drehmomenterhöhung von 44 % bis 100 % anwächst-schon ohne Klammerversatz- und daß sich die Wow- und Flutter-Störungen ohne Klammerversatz um ca. 11 % bis ca. 74 % erhöhen und mit Klammerversatz um 51,5 bis ca. 69 % sehr deutlich erhöhen.

Die CC nach dem Stand der Technik ist also rein von der Mechanik nicht für alle auf dem Markt befindlichen Recorder zum störungsfreien Betrieb geeignet und verschlechtert die elektroakustische Wiedergabe um die Hälfte bis zu zwei Dritteln, falls die Bandklammer nur um 0,1 mm hervorsteht, was produktionstechnisch häufiger vorkommt.

Meßergebnisse der CC B (BASF)

| Δ (d-b) [mm] | 0,1 | 0,15 | 0,20 | |
|---|---|---|---|---|
| Md [Mcm] | 0 | 0 | 0,01 | okV |
| | 0,03 (6,7 %) | 0,035 (7,7 %) | 0,04 (8,9 %) | mkV |
| W+F [%] | 0 | 0 | 0 | okV |
| | 0,025 (4,2 %) | 0,0375 (6,25 %) | 0,04 (6,7 %) | mkV |

okV = ohne Klammerversatz
mkV = mit Klammervversatz

Hierzu wird festgestellt, daß trotz erheblicher Einengung der Federwege der Gleitfolien beim Drehmoment eine nur geringe Zunahme unter 9 % auftritt selbst bei Bandklammerversatz. Diese Toleranz wird von den meisten Recordern ohne weiteres verkraftet, so daß mechanisch bedingte Störungen beim Betrieb der CC auf den Geräten nicht auftreten.

Hinsichtlich Wow- und Flutter-Störungen liegen diese nei der CC B (BASF) - selbst bei Bandklammerversatz - deutlich unter 7 %, was in Anbetracht der erschwerten Bedingungen: Einengung des Federweges plus Bandklammerversatz die große Zuverlässigkeit dieser erfindungsgemäßen Gleitflolienausführungen bestätigt.

Die CC A ist mit ihren Folien mit den oben beschriebenen Längsprägungen nicht zum ausreichend kontinuierlichen Führen des Bandwickels und der aufzuwickelnden Bandwindungen geeignet, so daß diese CC A in etwa 10 % der getesteten CC-Anzahl zum Festlaufen führten.

Die vorliegende Erfindung hat das Ergebnis erbracht, daß ein kontinuierlicher Federandruck zwischen den Folien und dem Bandwickel bzw. den Folien und dem Band vorhanden sein und dieser Federandruck über die Fläche der Folie bzw. der Kassette verschieden groß gewählt werden soll.

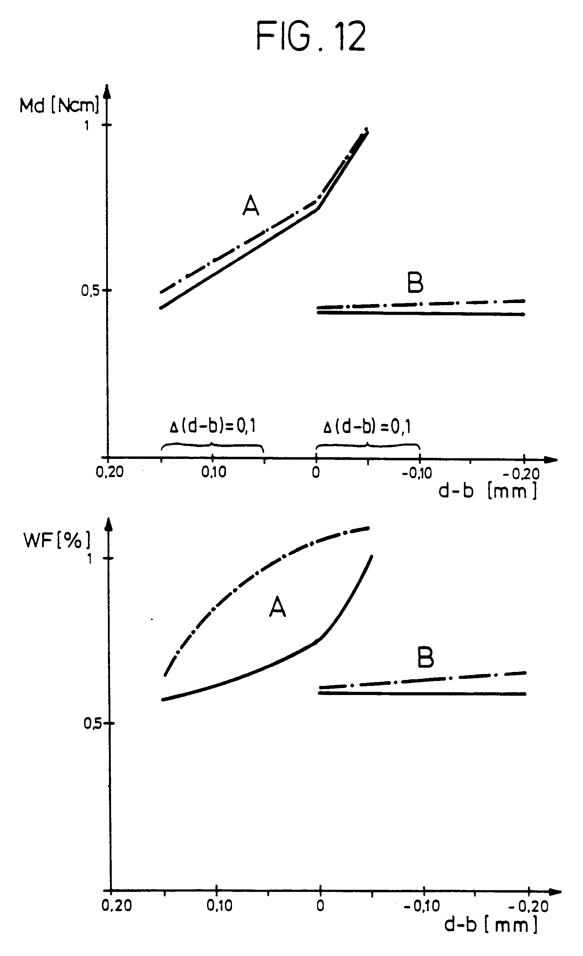

Es wurde gemäß obigen Vergleichsversuchen, deren Ergebnisse in Figur 12 dargestellt sind, die CC A in Richtung auf die vorliegende Erfindung modifiziert, so daß schließlich bei d-b = 0 ein ständiger Kontakt der Prägungen mit dem Bandwickel erfolgte. Die Drehmomentkurven A zeigen deutlich, daß von diesem Betriebszustand d-b = 0 ab das Drehmoment Md mit großem Gradienten anstieg, was in der Praxis in fast allen Fällen rasch zum Ausfall der Kassette führt, da dann weder Spul-, noch Aufnahme-/Wiedergabebetrieb möglich ist. Die Kurven B, die mit einer Folie 20 mit K 1,2 und C 3/2 Längsknicken (eine sogenannte 3 1/2-Knick-Folie) gemessen werden, zeigen dagegen einen nur sehr geringern Gradienten eines leicht erhöhten Drehmoments nur im Falle des Kernversatzes.

Was das Ein-/Auslaufen des Bandabschnitts auf den bzw. von dem Bandwickel 4 betrifft, so wurde außerdem bei der CC A eine Schrägstellung und ein Umklappen des ein-/auslaufenden Bandabschnitts ähnlich wie bei der Folie 20 mit zwei Doppelknicken K 1,2 und K 3,4 beobachtet (Meßwerte s. Figur 9), so daß im Vergleich die erfindungsgemäße BASF Chrom Maxima II CC mit 3 1/2-Knick-Folien) auch in dieser Hinsicht weit besser abschnitt (vgl. Meßwerte in Figur 11 sowie Wow- und Flutter-Messungen in Figur 12) als die CC A nach dem Stand der Technik.

Außer den beispielsweise beschriebenen Ausführungen von Kassetten mit Folien und letzteren selbst sind selbstverständlich weitere Ausführungen möglich. Beispielsweise kann es vorteilhaft sein, durch Gehäusevorsprünge die Federwege der Folien stellenweise noch zu verkleinern (oder durch Gehäuseausnehmungen zu vergrößern), so daß sich ebenfalls unterschiedliche Federkonstanten im Bereich von Wickelkernen, Bandwickeln und Band erzielen lassen.

Eine Bandkassette ist mit Folien mit gebogenen und geknickten Folienbereichen ausgebildet, die aus Längsknicken bestehen, die unterschiedliche Querschnittsformen für verschieden große Federdruckkräfte aufweisen, und die sowohl zum Führen des Wickelkerns, des Bandwickels als auch zum Ausrichten und Führen des aufzuwickelnden/abzuwickelnden Bandabschnitte dienen können. Praktische Ausführungen der Längsknicke unterscheiden sich durch verschiedene Querschnittsformen, auch im Verlauf eines Längsknicks, sowie durch verschiedene Anordnungen, parallel oder im Winkel zur Längsachse der Kassette.

**Patentansprüche**

1.    Bandkassette, insbesondere Magnetbandkassette mit einem Gehäuse, umfassend Boden- und Deckelwände und Gehäuse-Rück-und Vorderseiten, mit mindestens einem Bandwickel (W) auf einem im wesentlichen flanschlosen Wickelkern (4), auf den und/oder von dem ein Band (8) auf- bzw. abwickelbar ist, wobei zwischen dem Bandwindungen aufweisenden Bandwickel (W) und den Boden- und Deckelwänden der Kassette Folien (9, 20 bis 25) mit abgebogenen oder abgeknickten, einander zugeordneten und in bezug auf die Kassettenmittelebene einander gegenüberliegenden Folienbereichen vorgesehen sind, die federnd auf den oder die Bandwickel (W) drücken, wobei die Folien (9, 20 bis 25) im Mittelbereich als federnde Folienbereiche beidseitig der Mittellängsachse (M) der Kassette angeordnete Längsknicke (K 1,2; K 3; C 3/2) aufweisen, die sich einerseits teilweise an den Boden-bzw. Deckelflächen (17) abstützen und die andererseits zum Bandwickel (W) hin gerichtete Knickteile aufweisen, die zumindest auf den Wickelkern (4) und/oder Bandwickel (W) Federdruckkräfte ausüben, dadurch gekennzeichnet, daß die Längsknicke (K 1,2; K 3; C 3/2) mit unterschiedlichen Querschnittsformen ausgebildet sind zur Ausübung verschieden großer Federdruckkräfte auf den zumindest einen Wickelkern (4) und/oder Bandwickel (W), wobei jede der unterschiedlichen Querschnittsformen (DK, EK) entweder jeweils über die ganze Länge der Längsknicke (K 1,2; K 3,4) vorgesehen ist zur Erzeugung der jeweiligen unterschiedlichen Federandruckkraft über die ganze Länge jedes der Längsknicke (K 1,2; K 3,4) oder die unterschiedlichen Querschnittsformen im Zuge von wenigstens einem der Längsknicke (C 3/2) über jeweils einen Teil seiner Länge vorgesehen sind zur Erzeugung unterschiedlicher Federdruckkräfte jeweils in Teilen der Länge des wenigstens einen Längsknicks (C 3/2).

2. Kassette nach Anspruch 1, dadurch gekennzeichnet, daß die Längsknicke (C 3/2) in ihrem Mittelbereich (MDK) und in ihren Endbereichen (EAK) unterschiedliche Querschnittsformen für große bzw. geringere Federdruckkräfte aufweisen.

3. Kassette nach Anspruch 1, dadurch gekennzeichnet, daß die Längsknicke (K 1,2; C 3/2) innerhalb oder gerade außerhalb des Wickeldurchmessers (D) angeordnet sind.

4. Kassette nach Anspruch 1 und einem oder beiden Ansprüchen 2 und 3, dadurch gekennzeichnet, daß zwei Wickelkerne (4a, 4b) für zwei nebeneinanderliegende Bandwickel (W) vorgesehen sind und die Mitten der Wickelkerne (4) durch eine Längsmittelachse (M) miteinander verbunden sind und daß zwischen der Längsmittelachse (M) und der Gehäuse-Rückseite (2c, 2f) ein erster Längsknick (K 1,2) mit relativ großer Federdruckkraft vorgesehen ist, der bis zu den Folienenden durchgehend ausgebildet ist.

5. Kassette nach Anspruch 1 und 4, dadurch gekennzeichnet, daß zwischen der Kassettenlängsmittelachse (M) und der Gehäuse-Vorderseite (16) ein im Vergleich mit dem ersten Längsknick (K, 1,2) kürzerer Teil (MDK) eines zweiten Längsknick (C 3/2) ausgebildet ist, wobei dieser Teil (MDK) mindestens von einem zum anderen Wickelkern (4a, 4b), aber nicht bis zu den Folienenden, reicht.

6. Kassette nach Anspruch 4 oder 5, dadurch gekennzeichnet, daß der erste längere Längsknick (K 1,2) und/oder der kürzere Teil (MDK) des zweiten Längsknicks (C 3/2) jeweils durch einen Doppelknick (DK) gebildet sind, wobei die eine Knickkante zur Abstützung an den Boden- bzw. Deckelwänden (17) und die andere Knickkante zum Bandwickel (W) hin gerichtet ist.

7. Kassette nach Anspruch 4 und 5, dadurch gekennzeichnet, daß der erste längere Längsknick (K 1,2) und der kürzere Teil (MDK) des zweiten Längsknicks (C 3/2) jeweils durch zumindest eine relativ schmale Sicke oder Prägung (Fig. 8) mit relativ großer Federdruckkraft gebildet sind.

8. Kassette nach Anspruch 5, 6 oder 7, dadurch gekennzeichnet, daß der kürzere Teil (MDK) des zweiten Längsknicks (C 3/2) an den Enden mit je einem Ein-/Auslaufknickteil (EAK) für das auf- bzw. abzuwickelnde Band (8) versehen ist, der den kürzeren Teil (MDK) des zweiten Längsknicks (C 3/2) bis zur Umrißkante der Folie (20, 23-25) hin fortsetzt und der eine gegenüber dem kürzeren Teil (MDK) des zweiten Längsknicks (C 3/2) kleinere Federandruckkraft aufweist.

9. Kassette nach Anspruch 1, dadurch gekennzeichnet, daß sowohl zwischen der Längsmittelachse (M) der Kassette (K) und der Gehäuse-Rückseite (2c, 2f) als auch zwischen der Längsmittelachse (M) und der Gehäuse-Vorderseite (16) je ein von einem zum anderen Wickelkern (4a, 4b) reichender kürzerer Teil (MDK) eines Längsknicks (C 3/2) mit relativ großer Federdruckkraft vorgesehen ist, der an jedem Ende mit einem Ein-/Auslaufknickteil (EAK) für das auf- bzw. abzuwickelnde Band (8) versehen ist und der bis zur Umrißkante der Folie (22) reicht.

10. Kassette nach Anspruch 8 oder 9, dadurch gekennzeichnet, daß die Ein-/Auslauf-Knickteile (EAK) den kürzeren Teil (MDK) des Längsknicks (C 3/2) im wesentlichen geradlinig bis zu den Folienenden hin fortsetzen.

11. Kassette nach Anspruch 8 oder 9, dadurch gekennzeichnet, daß die Ein-/Auslauf-Knickteile (EAK) im Winkel ($\delta$) zum kürzeren Teil (MDK) des Längsknicks (C 3/2), insbesondere in Richtung zu einer Ecke der Folie (24), verlaufen.

12. Kassette nach einem oder mehreren der Ansprüche 8 bis 11, dadurch gekennzeichnet, daß die Ein-/Auslauf-Knickteile (EAK) mit relativ kleiner Federdruckkraft gebildet sind, wobei die höchste (EK) einzige Knickkante dem ein- bzw. auslaufenden Bandabschnitt (8) zugewandt ist.

13. Kassette nach einem der Ansprüche 8 bis 11, dadurch gekennzeichnet, daß die Ein-/Auslauf-Knickteile (EAK) durch je eine relativ breite Sicke oder Prägung mit relativ kleiner Federdruckkraft gebildet ist, von der die jeweils höchste Erhebung dem ein- bzw. auslaufenden Bandabschnitt (8) zugewandt ist.

14. Kassette nach einem der Ansprüche 1 bis 13, dadurch gekennzeichnet, daß die Federdruckkraft des dem Wickelkern (4) und/oder Bandwickel (W) zugeordneten ersten Längsknicks (K 1, 2) zur Federdruckkraft des dem Ein-/Auslaufbereich des Bandes (8) zugeordneten zweiten Längsknicks (C 3/2) im Bereich von 3:2 bis 4:1, insbesondere im Bereich von 4:1 bis 5:2, vorzugsweise bei 3:1 liegt.

15. Kassette nach Anspruch 6 und einem oder mehreren der Ansprüche 1 bis 5 und 7 bis 14, dadurch gekennzeichnet, daß die Folie (9, 20 bis 25) aus Polyester, insbesondere Polyethylenterephthalat, besteht, eine Dicke von 50 µm besitzt und der Abstand der Knicklinien der Doppelknicke (DK) 1 im Bereich von ca. 1, 5 bis 4 mm, insbesondere im Bereich von ca. 2 bis 3 mm, vorzugsweise bei 1 = 2,4 mm liegt.

16. Beilagefolien-Kombination für Bandkassetten, insbesondere Magnetbandkassetten, mit mindestens einem Bandwickel auf einem im wesentlichen flanschlosen Wickelkern, deren zwei Folien (9, 20 bis 25) mit abgebogenen oder abgeknickten, einander zugeordneten und in bezug auf eine Mittelebene (ME) einandergegenüberliegenden Folienbereichen versehen sind, wobei die Folien (9, 20 bis 25) in ihrem Mittelbereich als federnde Folienbereiche beiderseitig zur Mittellängsachse (MF) jeder Folie Längsknicke (K 1,2; K 3; C 3/2) aufweisen, die einerseits an der der Mittelebene (ME) abgewandten Seite der Folie ausgebildet sind und die andererseits zur Mittelebene (ME) hin gerichtete Knickteile mit einer Federkonstanten aufweisen, wobei die Längsknicke (K 1,2; K 3, 4; C 3/2) mit unterschiedlichen Querschnittsformen (DK, EK) ausgebildet sind zur Ausübung verschieden großer Federdruckkräfte in Richtung zur Mittelebene (ME), wobei jede der unterschiedlichen Querschnittsformen (DK, EK) entweder jeweils über die ganze Länge der Längsknicke (K 1,2; K 3,4) vorgesehen ist zur Erzeugung der jeweiligen unterschiedlichen Federandruckkraft über die ganze Länge jedes der Längsknicke (K 1,2; K 3,4) oder die unterschiedlichen Querschnittsformen im Zuge von wenigstens einem der Längsknicke (C 3/2) über jeweils einen Teil seiner Länge vorgesehen sind zur Erzeugung unterschiedlicher Federdruckkräfte jeweils in Teilen der Länge des wenigstens einen Längsknicks (C 3/2).

17. Folien nach Anspruch 16, dadurch gekennzeichnet, daß ein erster Längsknick (K 1,2) mit relativ großer Federkonstanten zum Aufbringen relativ großer Federdruckkraft vorgesehen ist, der bis zu den Enden jeder Folie durchgehend ausgebildet ist.

18. Folien nach Anspruch 17, dadurch gekennzeichnet, daß ein im Vergleich mit dem ersten Längsknick (K 1,2) kürzerer parallel liegender zweiter Längsknick (C 3/2) vorgesehen ist, der zur Quermittelachse (A-A') der Folie symmetrisch angeordnet ist.

19. Folien nach Anspruch 18, dadurch gekennzeichnet, daß der erste längere Längsknick (K 1,2) und/oder der kürzere Teil (MDK) des zweiten Längsknicks (C 3/2) jeweils durch einen Doppelknick (DK) gebildet sind, wobei die eine Knickkante zur Mittelebene (ME) hin gerichtet ist und die andere Knickkante zu der von der Mittelebene (ME) abgewandten Seite jeder Folie hin gerichtet ist.

20. Folien nach Anspruch 19, dadurch gekennzeichnet, daß der erste längere Längsknick (K 1,2) und der kürzere Teil (MDK) des zweiten Längsknicks (C 3/2) jeweils durch zumindest eine relativ schmale Sicke oder Prägung (Fig. 8) mit relativ großer Federdruckkraft gebildet sind.

21. Folien nach den Ansprüchen 18, 19 oder 20, dadurch gekennzeichnet, daß der kürzere Teil (MDK) des zweiten Längsknicks (C 3/2) an den Enden mit je einem Ein-/Auslaufknickteil (EAK) für das auf- bzw. abzuwickelnde Band (8) versehen ist, der den kürzeren Teil (MDK) des zweiten Längsknicks (C 3/2) bis zur Umrißkante der Folie (20, 23-25) hin fortsetzt und der eine gegenüber dem kürzeren Teil (MDK) des zweiten Längsknicks (C 3/2) kleinere Federandruckkraft aufweist.

22. Folien nach Anspruch 16, dadurch gekennzeichnet, daß symmetrisch zur Längsmittelachse (MF) der Folien je ein bezogen auf die Längsmittelachse innenliegender kürzerer Teil (MDK) eines Längsknicks (C 3/2) mit relativ großer Federdruckkraft vorgesehen ist, der an jedem Ende mit einem bezogen auf die Längsmittelachse (MF) außenliegender Ein-/Auslaufknickteil (EAK) für das auf- bzw. abzuwickelnde Band (8) versehen ist und der bis zur Umrißkante der Folie (22) reicht.

23. Folien nach Anspruch 21 oder 22, dadurch gekennzeichnet, daß die Ein-/Auslauf-Knickteile (EAK) den kürzeren Teil (MDK) des Längsknicks (C 3/2) im wesentlichen geradlinig bis zu den Folienenden hin fortsetzen.

24. Folien nach Anspruch 21 oder 22, dadurch gekennzeichnet, daß die Ein-/Auslauf-Knickteile (EAK) im Winkel (δ) zum kürzeren Teil (MDK) des Längsknicks (C 3/2), inbsbesondere in Richtung zu einer Ecke der Folie (24), verlaufen.

25. Folien nach einem oder mehreren der Ansprüche 21 bis 24, dadurch gekennzeichnet, daß die Ein-/Auslaufknickteile (EAK) durch je einen Einfach-Knick (EK) mit relativ kleiner Federdruckkraft gebildet sind, wobei die höchste (EK) einzige Knickkante jeder Folie der Mittelebene (ME) für den ein- bzw. auslaufenden Bandabschnitt (8) zugewandt ist.

26. Folien nach einem oder mehreren Ansprüchen 21 bis 24, dadurch gekennzeichnet, daß die Ein-/Auslaufknickteile (EAK) durch je eine relativ breite Sicke oder Prägung mit relativ kleiner Federdruckkraft gebildet ist, von der die jeweils höchste Erhebung jeder Folie der Mittelebene (ME) für den ein- bzw. auslaufenden Bandabschnitt (8) zugewandt ist.

27. Folien nach einem der Ansprüche 16 bis 26, dadurch gekennzeichnet, daß die Federdruckkraft des dem Wickelkern (4) und/oder Bandwickel (W) zugeordneten und der Mittelebene (ME) zugewandten ersten Längsknicks (K 1, 2) zur Federdruckkraft des dem Ein-/Auslaufbereich des Bandes (8) zugeordneten und der Mittelebene (ME) zugewandten zweiten Längsknicks (C 3/2) imn Bereich von 3 : 2 bis 4 : 1, insbesondere im Bereich von 4 : 1 bis 5 : 2, vorzugsweise bei 3 : 1 liegt.

28. Folien nach Anspruch 17 und einem oder mehreren der Ansprüche 17 bis 27, dadurch gekennzeichnet, daß jede Folie (9, 20 bis 25) aus Polyester, insbesondere Polyethylenterephthalat, besteht, eine Dicke von 50 μm besitzt und der Abstand der Knicklinien der Doppelknicke (DK) 1 im Bereich von ca. 1, 5 bis 4 mm, insbesondere im Bereich von ca. 2 bis 3 mm, vorzugsweise bei 1 = 2,4 mm liegt.

## Claims

1. A tape cassette, in particular a magnetic tape cassette, having a housing, comprising bottom and lid walls and housing back and front, and having at least one tape roll (W) on an essentially flangeless hub (4) onto which and/or from which a tape (8) can be wound or unwound, support liners (9, 20 to 25) having curved or bent liner regions which are coordinated with one another and are opposite one another in relation to the central plane of the cassette and exert spring force on the tape roll (W) or rolls being provided between the tape roll (W) having tape windings and the bottom and lid walls of the cassette, and the support liners (9, 20 to 25) having, as springy liner regions in the central region, longitudinal bends (K 1,2; K 3; C 3/2) arranged on either side of the central longitudinal axis (M) of the cassette, which on the one hand are partially supported on the bottom or lid surfaces (17) and on the other hand have bend parts which point toward the tape roll (W) and exert spring forces at least on the hub (4) and/or tape roll (W), wherein the longitudinal bends (K 1,2; K 3; C 3/2) are formed with different cross-sectional shapes in order to exert spring forces of different magnitudes on the one or more hubs (4) and/or tape rolls (W), each of the different cross-sectional shapes (DK, EK) being provided either in each case over the entire length of the longitudinal bends (K 1,2; K 3,4), for producing the different spring forces in each case over the entire length of each of the longitudinal bends (K 1,2; K 3,4), or the different cross-sectional shapes being provided in the course of at least one of the longitudinal bends (C 3/2) over a part of its length, for producing different spring forces in parts of the length of the one or more longitudinal bends (C 3/2).

2. A cassette as claimed in claim 1, wherein the longitudinal bends (C 3/2) have, in their central region (MDK) and in their end regions (EAK), different cross-sectional shapes for great or smaller spring forces.

3. A cassette as claimed in claim 1, wherein the longitudinal bends (K 1,2; C 3/2) are arranged inside or just outside the hub diameter (D).

4. A cassette as claimed in claim 1 and one or both of claims 2 and 3, wherein two hubs (4a, 4b) are provided for two adjacent tape rolls (W) and the centers of the hubs (4) are connected to one another by a longitudinal central axis (M), and a first longitudinal bend (K 1,2) which has a relatively great spring force and is continuously formed as far as the support liner ends is provided between the longitudinal central axis (M) and the housing back (2c, 2f).

5. A cassette as claimed in claims 1 and 4, wherein a part (MDK) of a second longitudinal bend (C 3/2), which part is shorter than the first longitudinal bend (K 1,2), is formed between the longitudinal central axis (M) of the cassette and the housing front (16), this part (MDK) extending at least from one hub to the other (4a, 4b) but not as far as the support liner ends.

6. A cassette as claimed in claim 4 or 5, wherein the first longer longitudinal bend (K 1,2) and/or the shorter part (MDK) of the second longitudinal bend (C 3/2) are each formed by a double bend (DK), one bend edge being oriented for support on the bottom or lid walls (17) and the other bend edge pointing toward the tape roll (W).

7. A cassette as claimed in claims 4 and 5, wherein the first longer longitudinal bend (K 1,2) and the shorter part (MDK) of the second longitudinal bend (C 3/2) are each formed by one or more relatively narrow beads or embossings (Fig. 8) having a relatively great spring force.

8. A cassette as claimed in claim 5, 6 or 7, wherein the shorter part (MDK) of the second longitudinal bend (C 3/2) is provided at each end with a run-in/run-out bend part (EAK) for the tape (8) to be wound or unwound, respectively, which run-in/run-out bend part continues the shorter part (MDK) of the second longitudinal bend (C 3/2) as far as the outer edge of the support liner (20, 23-25) and has a spring force which is smaller than that of the shorter part (MDK) of the second longitudinal bend (C 3/2).

9. A cassette as claimed in claim 1, wherein a shorter part (MDK) of a longitudinal bend (C 3/2), which shorter part extends from one hub (4a, 4b) to the other, has a relatively great spring force, is provided at each end with a run-in/run-out bend part (EAK) for the tape (8) to be wound or unwound and extends as far as the outer edge of the support liner (22), is provided both between the longitudinal central axis (M) of the cassette (K) and the housing back (2c, 2f) and between the longitudinal central axis (M) and the housing front (16).

10. A cassette as claimed in claim 8 or 9, wherein the run-in/run-out bend parts (EAK) continue the shorter part (MDK) of the longitudinal bend (C 3/2) essentially in a straight line as far as the support liner ends.

11. A cassette as claimed in claim 8 or 9, wherein the run-in/run-out bend parts (EAK) make an angle ($\delta$) with the shorter part (MDK) of the longitudinal bend (C 3/2), in particular in the direction of a corner of the support liner (24).

12. A cassette as claimed in one or more of claims 8 to 11, wherein the run-in/run-out bend parts (EAK) are each formed with a relatively small spring force, the highest (EK) single bend edge facing the tape section (8) running in or running out.

13. A cassette as claimed in any of claims 8 to 11, wherein the run-in/run-out bend parts (EAK) are each formed by a relatively broad bead or embossing having a relatively small spring force, the maximum projection of which in each case faces the tape section (8) running in or running out.

14. A cassette as claimed in any of claims 1 to 13, wherein the ratio of the spring force of the first longitudinal bend (K 1,2) coordinated with the hub (4) and/or tape roll (W) to the spring force of the second longitudinal bend (C 3/2) coordinated with the run-in/run-out region of the tape (8) is from 3 : 2 to 4 : 1, in particular from 4 : 1 to 5 : 2, preferably 3 : 1.

15. A cassette as claimed in claim 6 and one or more of claims 1 to 5 and 7 to 14, wherein the support liner (9, 20 to 25) consists of polyester, in particular polyethylene terephthalate, and has a thickness of 50 μm, and the distance 1 between the bend lines of the double bends (DK) is from about 1.5 to 4 mm, in particular from about 2 to 3 mm, preferably 2.4 mm.

16. A support liner combination for tape cassettes, in particular for magnetic tape cassettes, having at least one tape roll on an essentially flangeless hub, the two support liners (9, 20 to 25) of which are provided with curved or bent liner regions which are coordinated with one another and are opposite one another in relation to a central plane (ME), the support liners (9, 20 to 25) having, as springy liner regions in their central region, longitudinal bends (K 1,2; K 3; C 3/2) on either side of the central longitudinal axis (MF) of each support liner, on the one hand which are formed on the liner side facing away from the central plane (ME), and which on the other hand have bend parts pointing toward the central plane (ME), having a spring constant, the longitudinal bends (K 1,2; K 3,4; C 3/2) being formed with different cross-sectional shapes (DK, EK) in order to exert spring forces of different magnitudes in the direction of the central plane (ME), each of the different cross-sectional shapes (DK, EK) either being provided over the entire length of the longitudinal bends (K 1,2; K 3,4) for producing the different spring forces in each case over the entire length of each of the longitudinal bends (K 1,2; K 3,4), or the different cross-sectional shapes being provided in the course of at least one of the longitudinal bends (C 3/2) over a part of its length in each case, for producing different spring forces in parts of the length of the one or more longitudinal bends (C 3/2).

17. A support liner as claimed in claim 16, wherein a first longitudinal bend (K 1,2) having a relatively great spring constant for applying a relatively great spring force is provided, the said bend being continuous as far as the ends of each support liner.

18. A support liner as claimed in claim 17, wherein a second parallel longitudinal bend (C 3/2) which is shorter than the first longitudinal bend (K 1,2) and which is arranged symmetrically with respect to the transverse central axis (A-A′) of the support liner is provided.

19. A support liner as claimed in claim 18, wherein the first longer longitudinal bend (K 1,2) and/or the shorter part (MDK) of the second longitudinal bend (C 3/2) are each formed by a double bend (DK), one bend edge pointing toward the central plane (ME) and the other bend edge pointing toward that side of each support liner which faces away from the central plane (ME).

20. A support liner as claimed in claim 19, wherein the first longer longitudinal bend (K 1,2) and the shorter part (MDK) of the second longitudinal bend (C 3/2) are each formed by one or more relatively narrow beads or embossings (Fig. 8) having a relatively great spring force.

21. A support liner as claimed in claim 18, 19 or 20, wherein the shorter part (MDK) of the second longitudinal bend (C 3/2) is provided at each end with a run-in/run-out bend part (EAK) for the tape (8) to be wound or unwound, respectively, which run-in/run-out bend part continues the shorter part (MDK) of the second longitudinal bend (C 3/2) as far as the outer edge of the support liner (20, 23-25) and has a spring force which is smaller than that of the shorter part (MDK) of the second longitudinal bend (C 3/2).

22. A support liner as claimed in claim 16, wherein a shorter part (MDK), lying inside relative to the longitudinal central axis, of a longitudinal bend (C 3/2) having a relatively great spring force is provided symmetrically with respect to the longitudinal central axis (MF) of each support liner, which shorter part is provided at each end with a run-in/run-out bend part (EAK) lying outside relative to the longitudinal central axis (MF) and intended for the tape (8) to be wound or unwound and which extends as far as the outer edge of the support liner (22).

23. A support liner as claimed in claim 21 or 22, wherein the run-in/run-out bend parts (EAK) continue the shorter part (MDK) of the longitudinal bend (C 3/2) essentially in a straight line as far as the support liner ends.

24. A support liner as claimed in claim 21 or 22, wherein the run-in/run-out bend parts (EAK) make an angle (δ) with the shorter part (MDK) of the longitudinal bend (C 3/2), in particular in the direction of a corner of the support liner (24).

**EP 0 486 530 B1**

25. A support liner as claimed in one or more of claims 21 to 24, wherein the run-in/run-out bend parts (EAK) are each formed by a single bend (EK) having a relatively small spring force, the highest (EK) single bend edge of each support liner facing the central plane (ME) for the tape section (8) running in or running out.

26. A support liner as claimed in one or more of claims 21 to 24, wherein the run-in/run-out bend parts (EAK) are each formed by a relatively broad bead or embossing having a relatively small spring force, the maximum projection of each bead or embossing of each support liner facing the central plane (ME) for the tape section (8) running in or running out.

27. A support liner as claimed in any of claims 16 to 26, wherein the ratio of the spring force of the first longitudinal bend (K 1,2) coordinated with the hub (4) and/or tape roll (W) and facing the central plane (ME) to the spring force of the second longitudinal bend (C 3/2) coordinated with the run-in/run-out region of the tape (8) and facing the central plane (ME) is from 3 : 2 to 4 : 1, in particular from 4 : 1 to 5 : 2, preferably 3 : 1.

28. A support liner as claimed in claim 17 and one or more of claims 17 to 27, wherein each support liner (9, 20 to 25) consists of polyester, in particular polyethylene terephthalate, and has a thickness of 50 $\mu$m, and the distance 1 between the bend lines of the double bends (DK) is from about 1.5 to 4 mm, in particular from about 2 to 3 mm, preferably 2.4 mm.

## Revendications

1. Cassette à bande, en particulier cassette à bande magnétique, ayant un boîtier, comprenant des parois de fond et de couvercle et des côtés de boîtier arrière et avant, avec au moins un enroulement de bande (W), sur un noyau d'enroulement (4) en principe sans joue, sur lequel et/ou duquel une bande (8) peut être enroulée respectivement déroulée, des feuilles (9, 20 à 25), ayant des zones de feuilles repliées ou infléchies, tournées les unes vers les autres et orientées dans des directions mutuellement opposées par rapport au plan médian de la cassette étant prévues entre l'enroulement de bande (W) présentant les spires de bandes et les parois de fond et de couvercle de la cassette, ces zones de feuilles pressant élastiquement sur le (ou les) enroulement, de bande (W), les feuilles (9, 20 à 25) présentant, dans la zone médiane des inflexions longitudinales (K 1, 2; K 3; C 3/2), disposées, à titre de zones de feuilles élastiques, de part et d'autre de l'axe médian longitudinal (M) de la cassette et prenant appui, d'un côté, partiellement sur les surfaces de fond respectivement de couvercle (17) et présentant, de l'autre côté, des parties d'inflexion orientées vers l'enroulement de bandes (W) , qui exercent des efforts de pression élastique au moins sur le noyau d'enroulement (4) et/ou l'enroulement de bandes (W), caractérisée en ce que les inflexions longitudinales (K 1, 2; K 3; C 3/2) sont réalisées avec des formes de sections transversales différentes, en vue d'exercer des efforts de pression élastique d'ampleur différente sur le (au moins un) noyau d'enroulement (4) et/ou enroulement de bandes (W), chacune des différentes formes de sections transversales (DK; EK) étant prévue, soit sur toute la longueur des inflexions longitudinales (K 1, 2; K 3, 4) pour produire la force de pression élastique spécifique chaque fois différente sur toute la longueur de chacune des inflexions longitudinales (K 1, 2; K 3, 4), ou bien les différentes formes de sections transversales étant prévues au cours d'au moins l'une des inflexions longitudinales (C 3/2) sur chaque fois une partie de sa longueur en vue de produire des efforts de pression élastique différents chaque fois dans des parties de la longueur de la (au moins une) inflexion longitudinale (C 3/2).

2. Cassette selon la revendication 1, caractérisée en ce que les inflexions longitudinales (C 3/2) présentent, dans leurs zones médianes (M, D, K) et dans leurs zones d'extrémité (E,A,K), des sections transversales de formes différentes, pour donner des efforts de pression élastique élevés ou faibles.

3. Cassette selon la revendication 1, caractérisée en ce que les inflexions longitudinales (K 1, 2; C 3/2) sont disposées à l'intérieur ou juste à l'extérieur du diamètre d'enroulement (D) .

4. Cassette selon la revendication 1 et l'une ou les deux des revendications 2 et 3, caractérisée en ce que sont prévus deux noyaux d'enroulements (4a, 4b) pour deux enroulements de bandes (W) situés l'un à côté de l'autre et les centres des noyaux d'enroulements (4) étant reliés ensemble au moyen d'un axe médian longitudinal (M) et en ce que, entre l'axe médian longitudinal (M) et le côté arrière de boîtier (2c, 2f) est prévue une première inflexion longitudinale (K; 1, 2), produisant une force de pression élastique relativement grande et continuant jusqu'aux extrémités de feuilles.

5. Cassette selon les revendications 1 et 4, caractérisée en ce que, entre l'axe médian longitudinal de cassette (M) et le côté avant de boîtier (16) est réalisée une deuxième inflexion longitudinale (C 3/2) ayant une partie (MDK) plus courte que la première inflexion longitudinale (K, 1, 2), cette partie (MDK) arrivant au moins jusqu'à l'autre noyau d'enroulement (4a, 4b), mais pas jusqu'aux extrémités de feuille.

6. Cassette selon la revendication 4 ou 5, caractérisée en ce que la première inflexion longitudinale (K, 1; 2) et/ou la partie courte (MDK) de la deuxième inflexion longitudinale (C 3/2) sont chacune constituées par une double inflexion (DK), une première arête d'inflexion servant à assurer l'appui sur les parois de fond respectivement de couvercle (17) et l'autre arête d'inflexion étant orientée vers l'enroulement de bande (W).

7. Cassette selon la revendication 4 ou 5, caractérisée en ce que la première inflexion longitudinale longue (K; 1, 2) et la partie courte (MDK) de la deuxième inflexion longitudinale (C 3/2) sont chacune constituées par une moulure ou une empreinte relativement étroite (figure 8) avec une force de pression élastique relativement grande.

8. Cassette selon la revendication 4, 6 ou 7, caractérisée en ce que la partie courte (MDK) de la deuxième inflexion longitudinale (C 3/2) est pourvue à chacune des extrémités d'une partie d'inflexion d'insertion et de sortie (EAK) pour la bande à enrouler respectivement à dérouler, qui prolonge la partie courte (MDK) de la deuxième inflexion longitudinale (C 3/2) jusqu'à l'arête du contour de la feuille (20, 23 à 25) et présente une force de pression élastique inférieure par rapport à celle que présente la partie courte (MDK) de la deuxième inflexion longitudinale (C 3/2).

9. Cassette selon la revendication 1, caractérisée en ce que tant entre l'axe médian longitudinale (M) de la cassette (K) et le côté arrière de boîtier (2c, 2f) qu'également entre l'axe médian longitudinal (M) de la cassette (K) et le côté arrière de boîtier (2c, 2f) qu'également entre l'axe médian longitudinal (M) et le côté avant de boîtier (16) sont prévus chaque fois une partie courte (MDK) , allant jusqu'à l'autre noyau d'enroulement (4a, 4b) d'une inflexion longitudinale (C 3/2) avec une force de pression élastique relativement grande, pourvues à chaque extrémité d'une partie d'inflexion d'entrée respectivement de sortie (EAK) pour la bande (8) à enrouler ou à dérouler et arrivant jusqu'à l'arête du contour de la feuille (22).

10. Cassette selon la revendication 8 ou 9, caractérisée en ce que les parties d'inflexion d'entrée/sortie (EAK) prolongent la partie courte (MDK) de l'inflexion longitudinale (C 3/2) sensiblement de façon rectiligne jusqu'aux extrémités de feuille.

11. Cassette selon la revendication 8 ou 9, caractérisée en ce que en ce que les parties d'inflexion d'entrée/sortie (EAK) s'étendent avec un angle ($\delta$) par rapport à la partie courte (MDK) de l'inflexion longitudinale (C 3/2), en particulier dans la direction d'un angle de la feuille (24).

12. Cassette selon l'une ou plusieurs des revendications 8 à 11, caractérisée en ce que les parties d'inflexion d'entrée/de sortie (EAK) sont dotées d'une force de pression élastique relativement moindre, l'arête d'inflexion unique, la plus haute (EAK) étant tournée vers la section de bande (8) entrant ou sortant.

13. Cassette selon l'une des revendications 8 à 11, caractérisée en ce que les parties d'inflexion d'entrée/sortie (EAK) sont constituées chacune par une moulure ou une empreinte relativement large avec une force de pression élastique relativement petite, dont l'élévation la plus forte est tournée vers la section de bande (8) entrant ou sortant.

14. Cassette selon l'une des revendications 1 à 13, caractérisée en ce que le rapport entre la force de pression élastique de la première inflexion longitudinale (K 1,2) associée au noyau d'enroulement (4) et/ou à l'enroulement de bande (W) et la force de pression élastique de la deuxième inflexion longitudinale (C 3/2) associée à la zone d'entrée/de sortie de la bande (8), est situé dans la plage allant de 3:2 à 4:1, en particulier dans la plage allant de 4:1 à 5:2, de préférence de 3:1.

15. Cassette selon la revendication 6 et l'une ou plusieurs des revendications 1 à 5 et 7 à 14, caractérisée en ce que la feuille (9, 20 à 25) est en polyester, en particulier en terephthalate de polyéthylène, ayant une épaisseur de 50 µm et la distance (1) entre les lignes inflexion de l'inflexion double (DK) est située dans la plage allant d'à peu près 1,5 à 4 mm en particulier dans la plage allant d'à peu près 2 à 3 mm, avec de préférence 1 = 2,4 mm.

16. Combinaison de feuilles de garniture, pour cassettes à bande, en particulier cassettes à bande magnétique, avec au moins un enroulement de bande sur un noyau d'enroulement pratiquement sans joue, dont deux feuilles (9, 20 à 25) sont pourvues de zones de feuilles repliées ou infléchies, tournées les unes vers les autres et opposées les unes aux autres par rapport au plan médian (ME), les feuilles (9, 20 à 25) présentant dans leurs zones médianes, servant de zones de feuilles élastiques, de part et d'autre de l'axe longitudinal médian (MF) de chaque feuille des inflexions longitudinales (K 1,2; K 3; C 3/2) qui sont réalisées d'une part du côté de la feuille opposée au plan médian (ME) et qui présente d'autre part des parties d'inflexion, orientées vers le plan médian (ME) ayant une constante élastique, les inflexions longitudinales (K 1,2; L 3,4; C 3/2) étant réalisées avec des formes de sections transversales (DK, EK) différentes pour exercer des efforts de pression élastique de valeurs différentes dans la direction du plan médian (ME) chacune des différentes formes de sections transversales (DK EK) soit sur toute la longueur des inflexions longitudinales (K 1, 2; K 3,4) pour produire la force de pression élastique différente spécifique sur toute la longueur de chacune des inflexions longitudinales (K 1, 2: K 3,4) soit les différentes formes de section transversales étant prévues au cours d'au moins l'une des inflexions longitudinales (C 3/2) sur chaque fois une partie de sa longueur pour produire des efforts de pression élastique différents chaque fois dans des parties de la longueur de la (au moins une) inflexion longitudinale (C 3/2).

17. Feuilles selon la revendication 16, caractérisées en ce qu'une première inflexion longitudinale (K 1,2) ayant une constante d'élasticité relativement grande, pour exercer une force de pression élastique relativement grande, est prévue continuant jusqu'aux extrémités de chaque feuille.

18. Feuilles selon la revendication 17, caractérisées en ce qu'une deuxième inflexion longitudinale (C 3/2) parallèle et plus courte que la première inflexion longitudinale (K 1,2) est prévue et est disposée symétriquement par rapport à l'axe médian transversale (A-A') de la feuille.

19. Feuilles selon la revendication 18, caractérisées en ce que la première inflexion longitudinale longue (K 1,2) et/ou la partie courte (MDK) de la deuxième inflexion longitudinale (C 3/2) sont chacune formées par une double inflexion (DK), la première arête d'inflexion étant orientée vers le plan médian (ME) et l'autre arête d'inflexion étant orientée vers le côté de chaque feuille opposé au plan médian (ME).

20. Feuilles selon la revendication 19, caractérisées en ce que la première inflexion longitudinale longue (K 1,2) et la partie courte (MDK) de la deuxième inflexion longitudinale (C 3/2) sont chacune formées par au moins une moulure ou une empreinte relativement étroite (figure 8) avec une force de pression élastique relativement grande.

21. Feuilles selon les revendications 18, 19 ou 20, caractérisées en ce que la partie courte (MDK) de la deuxième inflexion longitudinale (C 3/2) est pourvue, à chacune des extrémités, d'une partie d'inflexion d'entrée/sortie (EAK) pour la bande (8) à enrouler ou à dérouler, qui prolonge la partie courte (MDK) de la deuxième inflexion longitudinale (C 3/2) jusqu'à l'arête du contour de la feuille (20, 23 à 25) et présente une force de pression élastique inférieure par rapport à celle que présente la partie courte (MDK) de la deuxième inflexion longitudinale (C 3/2).

22. Feuilles selon la revendication 16, caractérisées en ce que, symétriquement par rapport à l'axe médian longitudinale (MF) des feuilles, est prévu chaque fois une partie courte (MDK), située à l'intérieur par rapport à l'axe médian longitudinal, d'une inflexion longitudinale (C 3/2), ayant une force de pression élastique relativement grande, pourvue à chaque extrémité d'une partie d'inflexion d'entrée/sortie (EAK) située à l'extérieur par rapport à l'axe médian longitudinal (MF) pour la bande (8) à enrouler respectivement à dérouler et arrivant jusqu'à l'arête de contour de la feuille (22).

23. Feuilles selon la revendication 21 ou 22, caractérisées en ce que les parties d'inflexion d'entrée/sortie (EAK) prolongent la partie courte (MDK) de l'inflexion longitudinale (C 3/2) sensiblement de façon rectiligne jusqu'aux extrémités de feuille.

24. Feuilles selon la revendication 21 ou 22, caractérisées en ce que les parties d'inflexion d'entrée/sortie (EAK) s'étendent avec un angle (δ) par rapport à la partie courte (MDK) de l'inflexion longitudinale (C 3/2), en particulier dans la direction d'un angle de la feuille (24).

25. Feuilles selon l'une ou plusieurs des revendications 21 à 24, caractérisées en ce que les parties d'inflexion d'entrée/de sortie (EAK) sont dotées d'une force de pression élastique relativement moindre, l'arête d'inflexion unique la plus haute (EAK) étant tournée vers la section de bande (8) entrant ou sortant.

26. Feuilles selon l'une ou plusieurs des revendications 21 à 24, caractérisées en ce que les parties d'inflexion d'entrée/sortie (EAK) sont constituées chacune par une moulure ou une empreinte relativement large avec une force de pression élastique relativement petite, dont l'élévation chaque fois la plus forte est tournée vers la section de bande (8) entrant ou sortant.

27. Feuilles selon l'une ou plusieurs des revendications 16 à 26, caractérisées en ce que la force de pression élastique de la première inflexion longitudinale (K 1,2) associée au noyau d'enroulement (4) et/ou à l'enroulement de bande (W) est située, par rapport à la force de pression élastique de la deuxième inflexion longitudinale (C 3/2) associée à la zone d'entrée/de sortie de la bande (8), en un rapport situé dans la plage allant de 3:2 à 4:1, en particulier dans la plage allant de 4:1 à 5:2, en se situant de préférence à 3:1.

28. Feuilles selon la revendication 17 et l'une ou plusieurs des revendications 17 à 27, caractérisées en ce que la feuille (9, 20 à 25) est en polyester, en particulier en terephthalate de polyéthylène, ayant une épaisseur de 50 μm et la distance (l) entre les lignes d'inflexion de l'inflexion double (DK) est située dans la plage allant d'à peu près 1,5 à 4 mm en particulier dans la plage allant d'à peu près 2 à 3 mm, avec de préférence 1 = 2,4 mm.

# FIG.1

FIG.2

K1,2

MF

L

20

A          B

A-A'          B-B'

DK

α

e          h

DK

EK

K3,4          MDK   A'          C3/2          B'

EAK          EAK          β

H

FIG.3

EAK          21          A          K1,2

MF

A-A'

ι

A'          K3

FIG.4

22          A          C3/2          B

MF

A-A'          B-B'

A'          B'

C3/2

FIG.5

FIG.6

FIG.7

FIG.7 A

# FIG.8

FIG.9

FIG.10

FIG.11

FIG . 12